Europäisches Patentamt

European Patent Office

Office européen des brevets

(19)

(11) Publication number: **0 048 036**
**A2**

(12) **EUROPEAN PATENT APPLICATION**

(21) Application number: **81108896.2**

(22) Date of filing: **03.06.80**

(51) Int. Cl.³: **F 16 B 19/00**

(30) Priority: **09.06.79 GB 7920157**

(43) Date of publication of application:
**24.03.82 Bulletin 82/12**

(84) Designated Contracting States:
**AT BE DE FR GB IT NL SE**

(60) Publication number of the earlier application
in accordance with Art. 76 EPC: **0 021 640**

(71) Applicant: **UNITED GAS INDUSTRIES LIMITED**
**216, Rowan Road Steatham Vale**
**London SW16 5HX(GB)**

(72) Inventor: **Pye, Alfred Edward**
**20, Selbourne Avenue**
**Tolworth Surrey(GB)**

(74) Representative: **Betteridge, Eileen Margaret**
**216, Rowan Road**
**Streatham Vale London, SW16 5HX(GB)**

(54) **Dry gas meters.**

(57) A gas meter has oscillating valves (19, 20) which move back-and-forth on a seat (13) to cover and uncover valve openings. The valves each have a key-hole shaped opening (37, 38). The seat (13) has pins (42, 43) each formed with a key-hole shaped head which, when aligned with a respective opening (37, 38), may be pushed therethrough to form a pivotal mounting for the valve. The valve in use never enters the position in which the key-holes are aligned and the pins can be withdrawn.

EP 0 048 036 A2

./...

FIG. 1

- 1 -

## Dry Gas Meters.

This invention relates to dry gas meters of the kind in which back-and-forth movements of diaphragms in gas chambers are transmitted from a flag rod to operate oscillating valves for the admission and release of gas from the chambers.

The invention provides a gas meter of the kind in which back-and-forth movements of diaphragms in gas chambers are transmitted to operate oscillating valves for the admission of gas to the gas chambers, wherein each valve is mounted on a stationary pivot pin which passes through a corresponding opening in the valve, each said opening being circular in cross-section with a slot extension therefrom and each pin having a shank which engages in the circular part of the opening and a head which protrudes from the opening, and each said head being shaped to extend into said slot extension whereby said pin head may pass through the opening only when the slot extension of the opening is aligned with the pin head.

A specific embodiment of the invention is shown in the accompanying drawing, in which:-

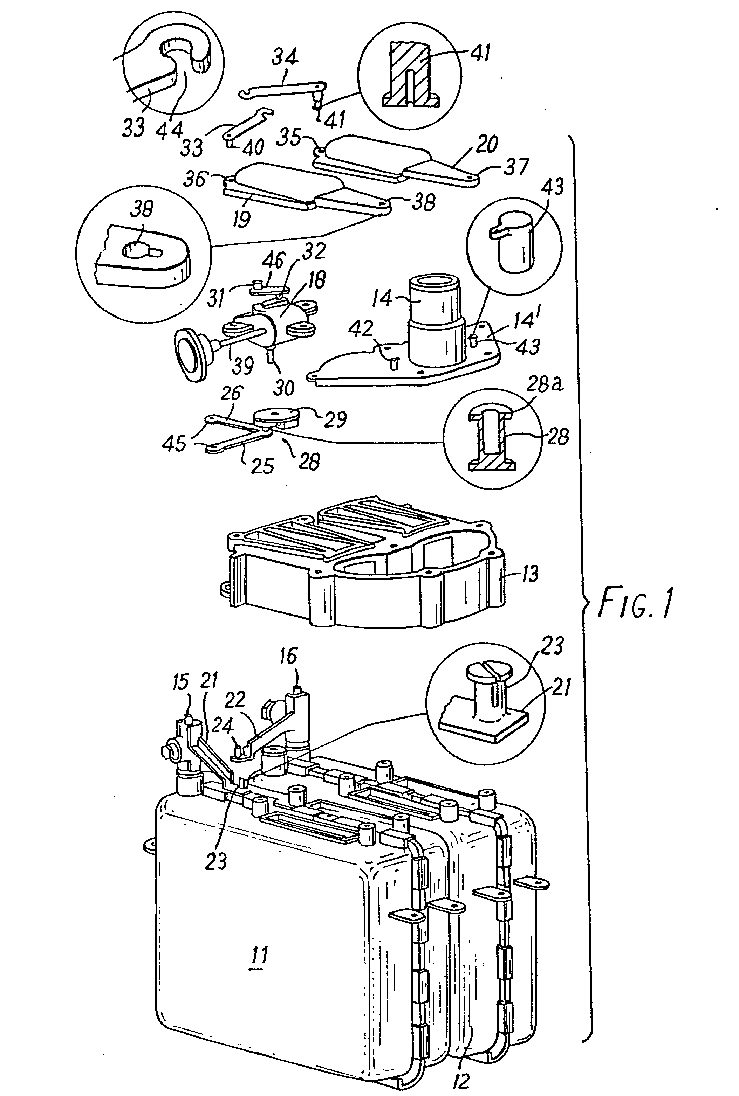

Figure 1 is an exploded perspective view of a gas meter of the kind described, with insets of details of various parts.

The meter comprises a pair of gas chambers (11, 12) each divided by a flexible diaphragm, the chambers on each side of the diaphragm being alternately supplied with gas via valve openings in seat (13). Gas exhausts from the chambers through an exhaust tube (14), carried on a plate (14') secured to seat (13). Back-and-forth movements of each diaphragm are translated into oscillating movements of metal flag rods (15, 16) which extend in gas-tight manner out of the gas chambers to be connected to a lever drive mechanism. The lever drive mechanism transmits the oscillating movement of the flag rods to valves (19, 20) and to an index (not shown).

The lever drive mechanism is formed entirely of members made in a resilient plastics material, e.g. acetal. Flag arms (21, 22) are screwed tightly onto the flag rods and are directed downwardly from the flag rods. At their lower ends they carry upwardly directed pins (23, 24) over which openings (45) in the ends of crank levers (25, 26) are spring fitted, so allowing the levers to be pivotally attached to the flag arms by simply pushing them over the pins. The pins have their upper ends of slightly increased diameter, as shown in the inset, such that the openings in the levers have to be forced over them, the openings then being a loose fit on the lower portion of the pins but retained thereon by the increased diameter upper ends. It will be appreciated that the drive transmitted through the pins tends to produce forces normal to the pin axes, which do not tend to pull the pins out of the openings. They can, however, be dismounted when required by sufficient upward pressure. The crank levers (25, 26) are at their other ends loosely threaded onto a common pivot pin (28) seen best in the inset, which is a spring fit in a tangent member (29), the pin (28) having an increased diameter upper end (28a) similar to pins (23, 24).

The tangent member (29) drives a spindle (70) of a gear box (18), the spindle emerging at the top of the gear box to drive a crank drive (46) having two opposed acetal crank pins (31, 32). The gear box shaft (39) drives an index (not shown) for recording the volume of gas measured by the meter.

Two acetal valve-operating levers (33, 34) each have one end formed with a hooked opening (44) which is a spring fit on one of the crank pins (31, 32). The open mouth of the hook is slightly smaller than the diameter of the corresponding crank pin, so that it can be forced onto the crank pin by resilient deformation of the hook, but remains connected until sufficient force is applied to it to disconnect it. The other ends of the levers have downwardly directed pins (40, 41) which are spring fits in openings (35, 36) in the valves (19, 20). the pins having increased diameter ends like pins (23, 24, 28).

The valves have key-hole shaped openings (37, 38) in which engage pins (42, 43), each pin having a mating key-hole shaped top as seen best in the inset. The pins (42, 43) are formed integrally with the plate (14') and exhaust tube (14) in a single acetal member secured directly to the seat (13). The valves (19, 20) oscillate back-and-forth across the surface of seat (13) to cover and uncover the valve openings. To mount the valves on the pins, the key-hole tops of the pin heads are aligned with the key-hole openings and then passed through the openings. When the heads emerge from the openings, the valves are turned with respect to the pins so that the key-holes are no longer aligned, when the pin heads cannot pass through the openings, and the valves cannot be removed. The attitudes of the key-holes are chosen so that in use the oscillating valves never enter the position in which the key-holes are aligned and the pins could be withdrawn. The engagement of the valves with pins (40, 41) prevents them entering the aligned position. However, in deliberate disassembling, the pins (40, 41) can be removed and the valves then swivelled to the position in which the key-holes are aligned. The engagement of the pins (42, 43) in the circular part of the key-hole openings on the valves affords a pivotal mounting, the valves being reciprocated back-and-forth in an angle about pins (42, 43), driven through the levers (33, 34). In this movement the valve openings in seat (13) are opened and closed in timed relationship.

The term key-hole shaped opening is used herein to mean a circular opening having a slot or similar extension from one side of smaller width than the diameter of the circular opening, the key-hole heads of the pins having similar shapes with clearance to pass through the openings.

Claims:

1.     A gas meter of the kind in which back-and-forth movements of diaphragms in gas chambers are transmitted to operate oscillating valves for the admission of gas to the gas chambers characterized by each valve (19, 20) being mounted on a stationary pivot pin (42, 43) which passes through a corresponding opening (37, 38) in the valve, each said opening being circular in cross-section with a slot extension therefrom and each pin (42, 43) having a circular-section shank which engages in the circular part of the opening to provide a pivotal mounting for the valve and a head which protrudes from the opening, each said head being shaped to correspond to said opening and slot so that the head may pass through the opening only in one aligned position relative to the opening.

2.     A gas meter as claimed in claim 1, further characterized by the pin heads being orientated so that the normal oscillating motion of the valves (19, 20) about said pins (42, 43), the valve openings never enter said aligned positions relative to the pin heads.

3.     A gas meter as claimed in claim 2, further characterized by valve-operating levers (33, 34) secured to the valves (19, 20) and preventing them entering said aligned positions relative to the pin heads.

4.     A gas meter as claimed in any of claims 1 to 3, further characterized by said openings (37, 38) being key-hole shaped and said pin heads being also key-hole shaped and able to slide through said openings in said aligned position.

5.     A gas meter as claimed in any of claims 1 to 4, further characterized by said valves (19, 20) and pins (42, 43) being formed of acetal resin.

6.     A gas meter as claimed in claim 5, further characterized by said pins (42, 43) being formed integrally with a plate (14') and exhaust tube (14) secured to a seat (13) on which the valves (19, 20) slide.

7.     A method of assembling a valve in a gas meter of the kind claimed in any of claims 1 to 6, comprising the steps of aligning the opening (37, 38) in a valve (19, 20) with a corresponding pin head, sliding the pin through the opening, swivelling the valve into its operating range of positions and attaching it to a valve operating lever (33, 34).

8.　　A method as claimed in claim 7, further characterized by an initial step of securing a plate (14') integrally formed with pins (42, 43) to a valve seat (13) before mounting the valve.

1/1

0048036

FIG.1